# EUROPÄISCHE PATENTSCHRIFT

(11) **EP 4 408 605 B1**
(45) Veröffentlichungstag und Bekanntmachung des Hinweises auf die Patenterteilung: **03.09.2025**
(21) Anmeldenummer: 22761073.0
(22) Anmeldetag: 29.07.2022
(51) Int. Cl.: B23K 26/08, B23K 26/244, B23K 26/26, B23K 26/32, B23K 37/04, B23K 37/047, H01M 8/02, B23K 101/36

(54) **VORRICHTUNG UND VERFAHREN ZUM LASERSCHWEISSEN VON STAHLPLATTEN**
DEVICE AND METHOD FOR LASER WELDING STEEL PLATES
DISPOSITIF ET PROCÉDÉ DE SOUDAGE AU LASER DE PLAQUES D'ACIER

(30) Priorität: 27.09.2021 AT 507612021
(43) Veröffentlichungstag der Anmeldung: 07.08.2024
(73) Patentinhaber: ANDRITZ Soutec AG, 8413 Neftenbach (CH)
(72) Erfinder: MEYER, Hanspeter, 8536 Hüttwilen (CH); CLERC, Jean-Frédéric, 8180 Bülach (CH)
(74) Vertreter: Tschinder, Thomas
(86) Internationale Anmeldenummer: PCT/EP2022/071320
(87) Internationale Veröffentlichungsnummer: WO 2023/046341

(56) Entgegenhaltungen:
- WO-A1-2015/027346
- CN-A- 108 637 476
- DE-A1- 102016 200 387
- US-B1- 6 639 176

## Beschreibung

Die vorliegende Erfindung betrifft ein Verfahren zum Laserschweißen von ebenen Stahlplatten, insbesondere von Bipolarplatten für Brennstoffzellen im Nutzfahrzeugbau oder von Wärmetauscherplatten, siehe Anspruch 1. Die vorliegende Erfindung betrifft auch die Anwendung des Verfahrens zur Herstellung von Bipolarplatten oder Wärmetauscherplatten, siehe Anspruch 7.

In der Automobilindustrie geht der Trend infolge endlicher Erdölreserven und infolge des Klimawandels vermehrt in Richtung Reduktion von CO₂ und alternative Antriebe. Für Personenwagen und LKW kommen vermehrt Elektromotoren mit Batterien als Speichermedium zum Einsatz. In Zukunft werden sich aber auch andere Technologien wie beispielsweise Brennstoffzellen etablieren, insbesondere für den LKW-Bereich. Bipolarplatten (BPP) sind Hauptbestandteile einer Brennstoffzelle und bestimmen damit maßgeblich die Herstellungskosten und den Wirkungsgrad eines Brennstoffzellensystems. Aufgrund verschiedener Vorteile hinsichtlich der Herstellbarkeit und der Materialeigenschaften wie Stabilität, geringe Blechdicke und vielfältige Beschichtungsmöglichkeiten rücken die metallischen Ausführungen der Bipolarplatten in den Mittelpunkt der Forschung und Entwicklung und werden aktuell als die favorisierte Variante für zukünftige Großserienanwendungen von Brennstoffzellen gesehen. Ein Brennstoffzellensystem besteht aus einer Vielzahl von Einzelzellen mit jeweils einer BPP zwischen den Zellen, für automobile Anwendungen typischerweise mit 300 - 400 Bipolarplatten. Aufgrund der hohen Zahl an BPP pro Einzelsystem ist selbst bei moderaten Szenarien zukünftig davon auszugehen, dass die benötigten Stückzahlen schnell sehr hohe Dimensionen annehmen werden. Diese Herausforderung kann auch als enorme Chance für Zulieferbetriebe von BPP betrachtet werden. Voraussetzung hierfür ist aber eine wirtschaftliche und leistungsfähige Produktionstechnologie. Insbesondere das Schweißen der beiden Bipolarplattenhälften zu einer BPP ist aufgrund der Vielzahl von Schweißnähten, der damit verbundenen langen Schweißzeiten und den hohen Anforderungen an die Schweißnähte bei gleichzeitig sehr schwierigen Prozessbedingungen aufgrund der dünnen Materialien, eine zentrale Problemstellung und zur Zeit noch ein entscheidendes Hindernis für eine kosteneffiziente Fertigung.

BPP als solche sind aus dem Stand der Technik bekannt. Sie bestehen in der Regel aus zwei Bipolarplattenhälften, die zusammengefügt werden. Diese sind in der Regel als geprägte Folien bzw. umgeformte Bleche ausgebildet. Die Bipolarplattenhälften liegen aufeinander und werden in der Regel im Randbereich und an den Berührungsstellen mittels Laser dichtgeschweißt. Dabei erzeugt der Laser mehrere Meter Schweißnaht und eventuell zusätzliche Schweißpunkte. Alternativ sind auch Verfahren mit Widerstandsschweißen bekannt. Hierzu werden Schweißvorrichtungen verwendet, in denen die Bipolarplattenhälften oftmals mehrmals umgespannt werden müssen, damit eine Dichtkontur und sämtliche Schweißpunkte dargestellt werden können. Um sämtliche Dichtkonturen und Punkte schweißen zu können, muss dabei die zu schweißende Bipolarplatte aus der Spannvorrichtung gelöst und wieder eingesetzt werden, damit alle Bereiche der zu schweißenden BPP für den Schweißlaser zugänglich sind. Insbesondere bereiten umlaufende Dichtkonturen Probleme. Würden solche umlaufenden Dichtkonturen mit dem Laser in einem Schweißvorgang hergestellt, so könnte es sich als schwierig erweisen, im Inneren der Dichtkontur zusätzliche Spannelemente anzuordnen, welche die Bipolarplattenhälften im Inneren der umlaufenden Schweißkontur fixieren. Beim Umspannen besteht die Gefahr, dass die Positionierung nicht mehr übereinstimmt und Schweißpunkte an falschen Stellen gesetzt werden. Zusätzlich kann der gesamte Fertigungsprozess der Bipolarplatte durch das Umspannen der halbfertigen Bipolarplatte stark verzögert werden.

Die Patentschrift DE102016200387 beschreibt eine Vorrichtung und ein Verfahren zur Herstellung einer Bipolarplatte, bei dem der Verzug des Bauteils vergleichsweise gering ist. Das Einbringen von Schweißenergie erfolgt von oben und unten auf die BPP. Die Lage im Raum, bei der dies geschieht, ist nicht beschrieben.

In der WO2018149959 ist eine Spannvorrichtung mit Klemmhebeln gezeigt. Aus Bild und Text kann geschlossen werden, dass die Orientierung der BPP horizontal ist, d.h. die Fläche liegt horizontal auf einer Grundfläche auf.

GRÄBENER Maschinentechnik zeigt auf der Homepage eine komplette Fertigungslinie für BPP. Unter https://www.graebener.com/en/cutting-and-welding sind auch zwei Schweißanlagen genauer gezeigt. BPP werden im Stillstand, horizontal liegend geschweißt.

Die Firma SITEC HTTPS://WWW.SITEC-TECHNOLOGY.DE/ stellt automatisierbare Laserschweißanlagen her, wobei das Schweißen auch hier im Stillstand und in einer horizontalen Ebene erfolgt.

Die Europäische Patentschrift EP3038789 beschreibt ein Verfahren, um in der industriellen Produktion von geschweißten Blechteilen - insbesondere von Tailored Blanks für die Automobilindustrie - die Zykluszeiten zu erhöhen und damit die Produktionskosten zu senken. Das Verfahren basiert auf einem Transportsystem mit einer fliegenden Optik und horizontaler Ausrichtung des Werkstücks während des Schweißens und benötigt keine aufwändige Kühlung der heißen Schweißnaht und keine Mittel zum einseitigen Festhalten der Werkstücke mit hoher Kraft auf dem Transportband. Damit kann der negative Einfluss des Platinen-Abstandes auf die Zykluszeit der Maschine massiv reduziert werden. Insgesamt können mit dem Verfahren die Schweiß-Nebenzeiten reduziert werden.

Bei einem solchen bekannten System mit vertikaler Bewegungsebene kann die rücklaufende Strecke nicht für Manipulationen verwendet werden, außer man verschafft sich Zugang von der Maschinenunterseite.

Die US 6,639,176 B1 beschreibt eine Schweißvorrichtung, bei der Bleche in einer vertikalen Ebene miteinander verschweißt werden, sodass der Platzbedarf für die Schweißvorrichtung möglichst gering ist.

Nachteilig an den vorab erwähnten Lösungen sind der hohe technische Aufwand für das prozesssichere Spannen der Bauteile, für das Abführen von Schweißrauch und Schweißspritzer aus der Anlage, große Maschinendimensionen mit hohen Investitionskosten sowie die insgesamt geringe Produktivität der Gesamtanlage.

Der vorliegenden Erfindung liegt daher die Aufgabe zu Grunde, ein Verfahren zu offenbaren, welche die vorstehend genannten Nachteile nicht aufweist.

Diese Aufgabe wird erfindungsgemäß durch ein Verfahren mit den in Anspruch 1 angegebenen Merkmalen gelöst. Vorteilhafte Ausführungsvarianten sind in den abhängigen Ansprüchen angegeben.

Die hier für das Verfahren beschriebene Vorrichtung beruht auf einer Transportvorrichtung, die die zu verschweißenden Werkstücke in der horizontalen Ebene umlaufend transportiert, womit die Anzahl der benötigten Anlagenteile stark beschränkt werden kann.

Da sich das umlaufende Transportband in einer horizontalen Ebene bewegt, wird der Zugriff von beiden Seiten ermöglicht. Das bedeutet, dass hier auf einer Seite die Stahlplatten (Werkstücke) verschweißt werden und auf der anderen Seite werden die Stahlplatten beladen und entladen.

Jeweils dazwischen werden die Stahlplatten durch Klemmplatten fixiert bzw. wird die Fixierung wieder gelöst.

Somit werden folgende Vorteile generiert:
▪ Senkung der Investitionskosten durch eine kleinere Anzahl von Schweißvorrichtungen
▪ Senkung der Investitionskosten durch Verkleinerung der Maschinendimensionen (Footprint, Bauteilgrößen, usw.)
▪ Senkung der Investitionskosten führt schließlich zu geringeren Produktionskosten.

Ein weiterer Vorteil dieser Erfindung liegt darin, dass der Schweißprozess in einer vertikalen Ebene, also in Lotrichtung und ungefähr senkrecht zur Transportrichtung erfolgt. Damit bleiben Schweißspritzer nicht auf dem zu bearbeitenden Werkstück liegen, womit eine geringere Verschmutzung der Werkstücke und der Vorrichtung resultiert.

In der vorgeschlagenen Konfiguration wird das Werkstück nur einmal eingespannt und anschließend bearbeitet, sodass ein mehrmaliges Einspannen mit den bekannten Problemen einer genauen Justierung während der Bearbeitung des Werkstücks entfällt und insgesamt eine hohe Genauigkeit beim Beladen, Bearbeiten und Entladen erreicht wird.

Ziel ist es, die Anzahl der hergestellten Teile pro Zeiteinheit signifikant zu erhöhen bei gleichzeitiger Teilekostenreduktion.

Die hier vorgestellte Erfindung ermöglicht also insgesamt eine effiziente und qualitativ hochwertige Fertigung. Die vorliegende Erfindung wird im Folgenden anhand von Ausführungsbeispielen unter Bezugnahme auf Zeichnungen weiter erläutert. Dabei zeigen:
- Fig. 1: eine Draufsicht auf die Transportvorrichtung in schematischer Darstellung,
- Fig. 2a: eine erste perspektivische Ansicht auf eine Spannvorrichtung,
- Fig. 2b: eine zweite perspektivische Ansicht auf eine Spannvorrichtung,
- Fig. 2c: eine dritte perspektivische Ansicht auf eine Spannvorrichtung,
- Fig. 2d: eine vierte perspektivische Ansicht auf eine Spannvorrichtung, und
- Fig. 3: eine Seitenansicht einer erfinderischen Anlage in schematischer Darstellung.

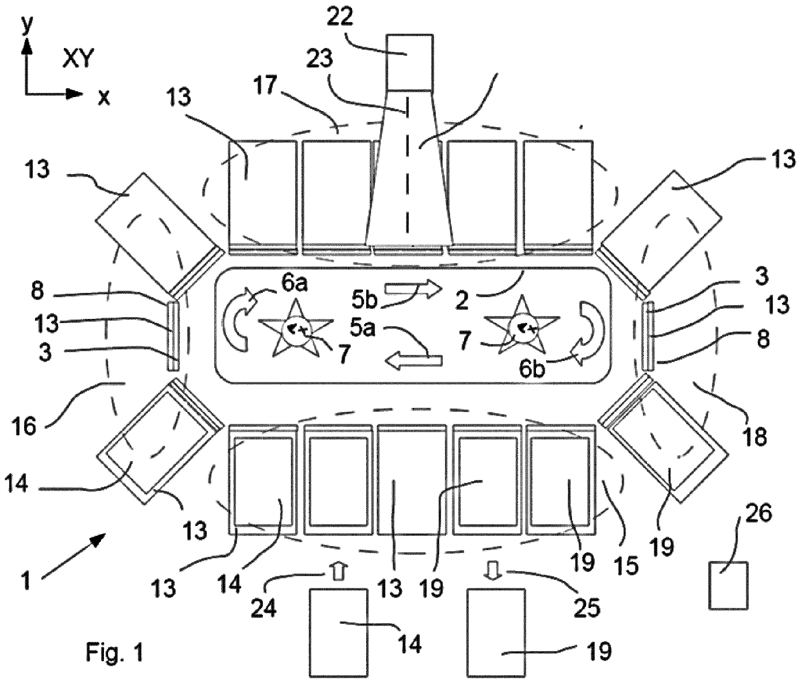

Fig.1 zeigt in einer Draufsicht eine umlaufende Transportvorrichtung 1, deren Antrieb 7 das Transportband 2 im Uhrzeigersinn in der Transportebene XY bewegt und dabei translatorische Bewegungsbereiche 5a,5b und rotative Bewegungsbereiche 6a,6b durchläuft. Die Transportebene XY ist dabei in Wesentlichen die Horizontalebene. Das Transportband 2 besteht aus einer Vielzahl von Kettengliedern 3, welche mit einer Spannvorrichtung 8 versehen sind. An jedem Kettenglied 3 ist eine Grundplatte 11 angebracht und ein schwenkbarer Klapphebel 13. Zwischen der Grundplatte 11 und dem Klapphebel 13 kann das zu verschweißende Werkstück 14 aufgenommen werden. Die Beladung 24 des umlaufenden Transportbandes 2 mit den Werkstücken, also mit den Stahlplatten erfolgt im translatorischen Bereich 5a bei ausgeklapptem und horizontal liegendem Klapphebel 13 in der Be-/Entladezone 15. In der Schweißvorrichtung-Ladezone 16 im rotativen Bewegungsbereich 6a wird das Werkstück 14 in der Spannvorrichtung 8 durch Zurückklappen (Hochklappen) des Klapphebels 13 in eine senkrechte Position gebracht und mittels Klemmmittel (Klemmplatten B 10b und A 10a) auf der Grundplatte 11 fixiert. In einem nächsten Schritt wird der Klapphebel 13 wieder in eine horizontale Position gebracht. Dies ist notwendig, damit im nachfolgenden Schritt der Laserstrahl 23 des Schweißlasers 22 auf das Werkstück 14 treffen kann. Im translatorischen Bereich 5b erfolgt in der Schweiß-/Schneidezone 17 die Bearbeitung des Werkstücks 14 mittels Laserstrahl 23 der Laseroptik 22. Hier werden die beiden Stahlplatten des Werkstücks 14 miteinander verschweißt. Es ist auch denkbar, dass durch den Laserstrahl 23 auch ein Zuschnitt oder ein Markieren erfolgt. In der Schweißvorrichtung-Entladezone 18 wird in einem ersten Schritt der Klapphebel 13 in eine vertikale Position geklappt und in einem zweiten Schritt die Spannvorrichtung 8 mit dem nun bearbeiteten Werkstück 19 von der vertikalen in eine horizontale Lage geklappt. In der Be-/Entladezone 15 wird das bearbeitete Werkstück 19 durch Entladung 25 vom umlaufenden Transportband 2 entfernt. Die Reinigungsstation 26 dient zum Reinigen der Spannvorrichtung 8.

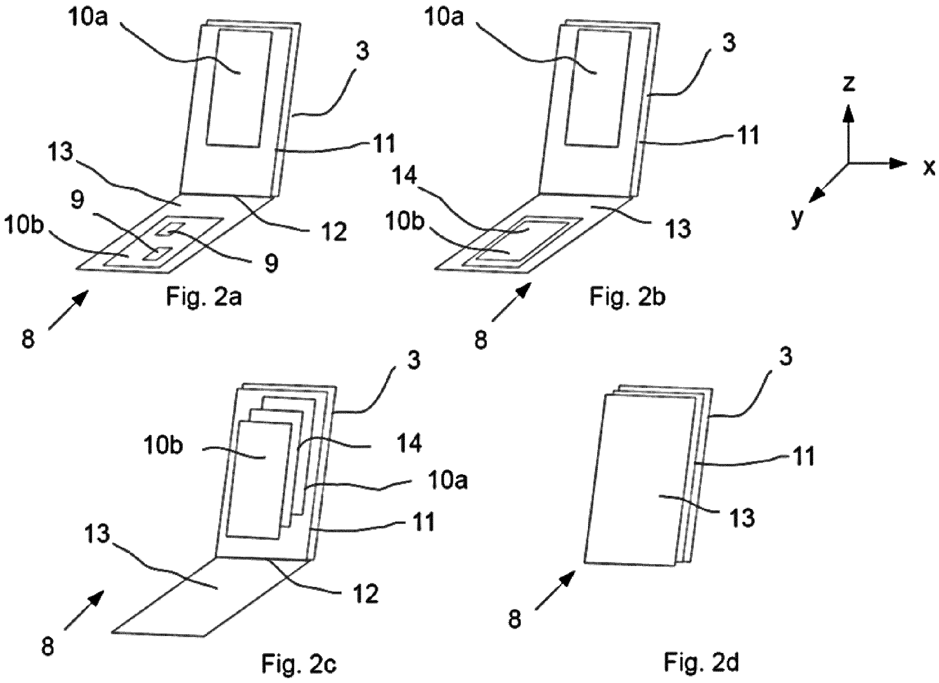

Fig. 2a zeigt eine erste perspektivische Ansicht auf die Spannvorrichtung 8 im Zustand vor dem Beladen, ohne das zu bearbeitende Werkstück 14. Auf der mit dem Kettenglied 3 fest verbundenen Grundplatte 11 ist eine Klemmplatte A 10a angebracht, vorzugsweise fix montiert. Die Klemmplatte B 10b, gegebenenfalls mit mehreren Teil-Klemmplatten 9 ist dabei lösbar auf dem Klapphebel 13 fixiert. Das Fixieren und Lösen der Klemmplatte B 10b auf dem Klapphebel 13 kann beispielsweise mit Hilfe von Magnetkräften erfolgen oder auch mechanisch. Der Klapphebel 13 befindet sich in einer horizontalen Lage in der XY-Ebene und ist hier drehbar um die Schwenkachse 12 mit der Spannvorrichtung 8 verbunden.

Fig. 2b zeigt eine zweite perspektivische Ansicht auf die Spannvorrichtung 8 im Zustand "Beladen", wobei das zu bearbeitende Werkstück 14 relativ zur Klemmplatte B 10b positioniert und fixiert ist. Das Werkstück 14 ist also auf die Klemmplatte B 10b aufgelegt. Der Klapphebel 13 befindet sich in einer horizontalen Lage in der XY-Ebene.

Fig. 2c zeigt eine dritte perspektivische Ansicht auf die Spannvorrichtung 8 im Zustand "Schweißen". Das zu bearbeitende Werkstück 14 ist zwischen den beiden Platten Klemmplatte A 10a und Klemmplatte B 10b fixiert. Auf dem Klapphebel 13 ist die Klemmplatte-B 10b nicht mehr vorhanden. Der Klapphebel 13 befindet sich in einer horizontalen Lage in der XY-Ebene. Das Werkstück 14, also die beiden zu verschweißenden Stahlplatten, sind zwischen den beiden Klemmplatten A 10a und B 10b eingeklemmt. Das Klemmen kann vorzugsweise mit Hilfe von Magnetkräften erfolgen. Die Klemmplatten A 10a and B 10b sind so ausgestaltet, dass sie die zu verschweißenden Stahlplatten über ihre gesamte Fläche ausreichend zusammenpressen, wobei die Bereiche, in denen der Laserstrahl 23 auf das Werkstück 14 trifft, in der Klemmplatte B 10b ausgenommen sind.

Fig. 2d zeigt eine vierte perspektivische Ansicht auf die Spannvorrichtung 8 im Zustand "Geschlossen". Der Klapphebel 13 wird aus der XY-Ebene in die XZ-Ebene geklappt, liegt nun auf der Grundplatte 11 auf und befindet sich in einer vertikalen Lage. Dieser Zustand wird beim Ablegen des Werkstückes 14 auf die Klemmplatte A 10a eingenommen und ebenso beim Abheben des Werkstückes 14 von der Klemmplatte A 10a.

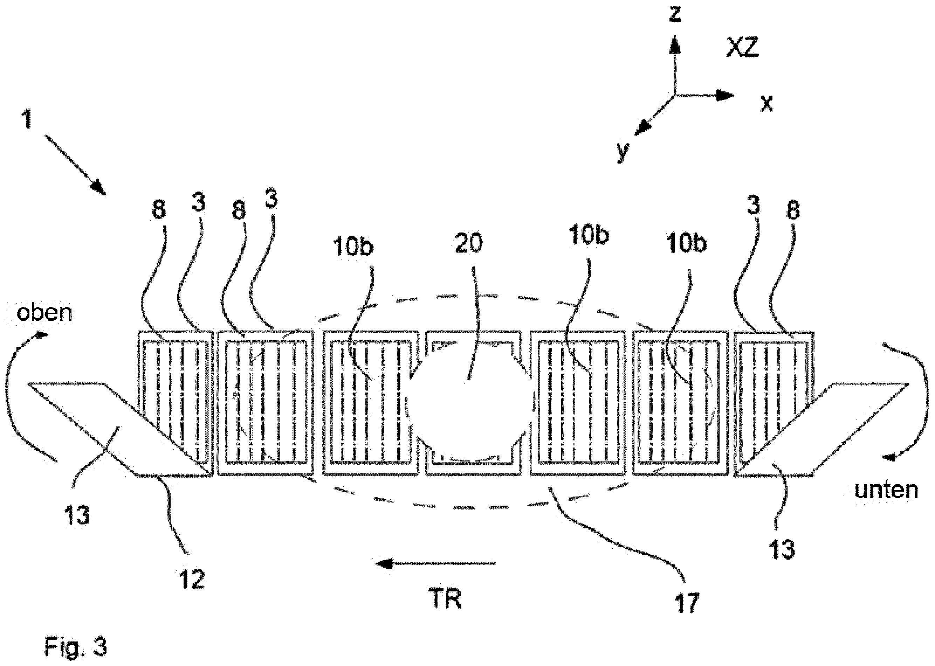

Fig. 3 zeigt in einer Seitenansicht die Schweiß-/Schneidezone 17 der umlaufenden Transportvorrichtung 1, deren Kettenglieder 3 sich kontinuierlich in der XY-Ebene in Transportrichtung TR bewegen. Die Spannvorrichtung 8 befindet sich im Zustand "Schweißen". Das zu bearbeitende Werkstück 14 wird mittels der Klemmplatte A 10 a und Klemmplatte B 10b in der Spannvorrichtung 8 eingeklemmt. In der Schweißebene XZ deckt die Laseroptik den gesamten Arbeitsbereich 20 ab. Die Klapphebel 13 befinden sich im Status "Herunterklappen" DOWN bzw. "Hochklappen" UP. Während der Schweißung ist der Klapphebel 13 heruntergeklappt.

Das erfindungsgemäße Verfahren zum Laserschweißen von Werkstücken 14 kann dabei folgendermaßen ablaufen:
In der Beladezone 15 wird der heruntergeklappte Klapphebel 13 der Spannvorrichtung 8 mit mindestens einem zu bearbeitenden Werkstück 14 beladen und das Werkstück auf der Klemmplatte B 10b fixiert, beispielsweise mit Hilfe von Magnetkräften. Die Klemmplatte B 10b liegt dabei auf dem Klapphebel 13 auf. In der Schweißvorrichtung-Ladezone 16 wird nun der Klapphebel 13 um die Schwenkachse 12 um etwa 90 Grad von der etwa horizontalen in eine etwa vertikale Lage geschwenkt und das zu bearbeitende Werkstück 14 und die Klemmplatte B 10b werden an der Grundplatte 11 und einer an der Grundplatte 11 befestigten Klemmplatte A (10a) fixiert.

Danach wird der Klapphebel 13 ohne die Klemmplatte B 10b und das Werkstück 14 um etwa 90 Grad wieder von der vertikalen in eine etwa horizontale Lage verschwenkt.

In der Schweiß-/Schneidezone 17 wird dann das Werkstück 14, welches zwischen der Klemmplatte A 10a und der Klemmplatte B 10b eingeklemmt ist, mit Hilfe eines Schweißlasers verschweißt. Danach wird in der Schweißvorrichtung-Entladezone 18 der Klapphebel 13 wieder um die Schwenkachse 12 um etwa 90 Grad von der etwa horizontalen in eine etwa vertikale Lage geschwenkt und übernimmt sodann das bearbeitete Werkstück 19 und die Klemmplatte B 10b. Der Klapphebel 13 wird dann mit dem bearbeiteten Werkstück 19 und der Klemmplatte B 10b von der etwa vertikalen Position um 90 Grad in die etwa horizontale Lage zurückgeschwenkt. Der Transfer und das Fixieren des Werkstücks 14 und auch der Klemmplatte B 10b kann mit Hilfe von Magnetkräften erfolgen.

In der Entladezone 15 wird dann das bearbeitete Werkstück 19 von der Klemmplatte-B 10b entnommen und weiteren nachfolgenden Schritten zugeführt. Die Klemmplatte B 10b verbleibt immer in der Vorrichtung.

### Bezeichnungsliste

1 Transportvorrichtung
2 Transportband
3 Kettenglied
5a,b translatorischer Bewegungsbereich
6a,b rotativer Bewegungsbereich
7 Antrieb
8 Spannvorrichtung
9 Teil-Klemmplatten
10a Klemmplatte A
10b Klemmplatte B
11 Grundplatte
12 Schwenkachse
13 Klapphebel
14 Zu-bearbeitendes-Werkstück
15 Be-/Entladezone
16 Schweißvorrichtung-Ladezone
17 Schweiß-/Schneidezone
18 Schweißvorrichtung-Entladezone
19 Bearbeitetes-Werkstück
20 Arbeitsbereich
22 Laseroptik
23 Laserstrahl
24 Beladung
25 Entladung
26 Reinigungsstation
TR Transportrichtung
XY Transportebene
XZ Schweißebene

## Patentansprüche

1. Verfahren zum Laserschweißen von Werkstücken (14) mit einer Vorrichtung, mit einer in der Transportebene XY umlaufenden Transportvorrichtung (1), bestehend aus einem kettenähnlichen Transportband (2) mit mehreren Kettengliedern (3), die mit je einer Spannvorrichtung (8) versehen sind, die eine Grundplatte (11) und einen Klapphebel (13) aufweist, wobei das Werkstück (14) mittels Klemmplatten (10a,10b) für den Schweißvorgang an der Grundplatte (11) fixierbar ist, wobei die Vorrichtung mindestens eine Laseroptik (22) zum Verschweißen des Werkstücks (14) aufweist, wobei die Transportebene XY in der Horizontalebene liegt und der Schweißvorgang in der Schweißebene XZ erfolgt, die vorzugsweise etwa vertikal im Raum liegt, also in Lotrichtung, **dadurch gekennzeichnet, dass** das Verfahren folgende Schritte umfasst:
- in einer Beladezone (15): Beladen der Spannvorrichtung (8) mit mindestens einem zu bearbeitenden Werkstück (14) und Fixieren des zu bearbeitenden-Werkstücks (14) auf einer Klemmplatte B (106)
- in einer Schweißvorrichtung-Ladezone (16): Drehen des Klapphebels (13) um die Schwenkachse (12) um etwa 90 Grad von der etwa horizontalen in eine etwa vertikale Lage und Fixieren des zu bearbeitenden Werkstücks (14) und der Klemmplatte B (10b) an der Grundplatte (11) und einer Klemmplatte A (10a)
- in einer Schweißvorrichtung-Ladezone (16): Zurückdrehen des Klapphebel (13) der Spannvorrichtung (8) um etwa 90 Grad von der vertikalen in eine etwa horizontale Lage
- in einer Schweiß-/Schneidezone (17): Verschweißen des Werkstücks (14), welches zwischen der Klemmplatte A (10a) und der Klemmplatte B (10b) fixiert ist
- in einer Schweißvorrichtung-Entladezone (18): Drehen des Klapphebels (13) um die Schwenkachse (12) um etwa 90 Grad von der etwa horizontalen in eine etwa vertikale Lage und Übernehmen des bearbeiteten Werkstücks (19) und der Klemmplatte-B (10b)
- in der Schweißvorrichtung-Entladezone (18): Zurückdrehen des Klapphebels (13) mit dem bearbeiteten Werkstück (19) und der Klemmplatte B (10b) von einer etwa vertikalen Lage um 90 Grad in eine etwa horizontale Lage
- in einer Entladezone (15): Entnehmen des bearbeiteten Werkstücks (19) von der Klemmplatte-B (10b)

2. Verfahren nach Anspruch 1, **dadurch gekennzeichnet, dass** die umlaufende Transportvorrichtung (1) in der Transportebene XY, also in etwa horizontaler Ausrichtung, eine oval förmige Bahn beschreibt, die in zwei lineare Bewegungsbereiche (5a, 5b) und in zwei rotative Bewegungsbereiche (6a,6b) gegliedert ist.

3. Verfahren nach einem der Ansprüche 1 oder 2, **dadurch gekennzeichnet, dass** sich die in der Transportebene XY umlaufende Transportvorrichtung (1) in der Schweiß-/Schneidezone (17) und in der Be-/Entladezone (15) linear bewegt und in der Schweißvorrichtung-Entladezone (18) und in der Schweißvorrichtung-Ladezone (16) rotativ bewegt.

4. Verfahren nach einem der Ansprüche 1 bis 3, **dadurch gekennzeichnet, dass** das zu bearbeitende Werkstück (14), senkrecht zur Transportebene XY in der Spannvorrichtung (8) auf der umlaufenden Transportvorrichtung (1) fixiert ist und in der Schweiß-/Schneidezone (17) verschweißt wird.

5. Verfahren nach einem der Ansprüche 1 bis 4, **dadurch gekennzeichnet, dass** die Laserquelle (23) so ausgelegt ist, um mit der mindestens einen Laseroptik (22) eine Überdeckung des gesamten Arbeitsbereichs (20) zu erreichen.

6. Verfahren nach einem der Ansprüche 1 bis 5, **dadurch gekennzeichnet, dass** das Beladen und das Entladen des zu bearbeitenden Werkstücks (14) in der Be-/Entladezone (15) direkt auf die Klemmplatte-A (10a) erfolgt.

7. Anwendung des Verfahrens nach einem der Ansprüche 1 bis 6 zur Herstellung von Bipolarplatten für Brennstoffzellen oder für Wärmetauscherplatten zur Übertragung von thermischer Energie.

## Claims

1. Method for laser welding workpieces (14) with a device, with a transport device (1) rotating in the transport plane XY, consisting of a chain-like conveyor belt (2) with several chain links (3), which are each provided with a clamping device (8), which has a base plate (11) and a folding lever (13), wherein the workpiece (14) can be fixed to the base plate (11) by means of clamping plates (10a, 10b) for the welding process, wherein the device has at least one laser optical system (22) for welding the workpiece (14),
wherein the transport plane XY lies in the horizontal plane and the welding process takes place in the welding plane XZ, which preferably lies approximately vertically in space, i.e. in the perpendicular direction,
**characterised in that** the method comprises the following steps:
- in a loading zone (15): Loading the clamping device (8) with at least one workpiece (14) to be welded and fixing the workpiece (14) to be welded on a clamping plate B (10b)
- in a welding device - loading zone (16): Rotating the folding lever (13) about the swivelling axis (12) by approximately 90 degrees from the approximately horizontal to an approximately vertical position and fixing the workpiece (14) to be welded and the clamping plate B (10b) to the base plate (11) and a clamping plate A (10a)
- in a welding device - loading zone (16): Turning back the folding lever (13) of the clamping device (8) by approximately 90 degrees from the vertical to an approximately horizontal position
- in a welding/cutting zone (17): Welding of the workpiece (14), which is fixed between the clamping plate A (10a) and the clamping plate B (10b)
- in a welding device - unloading zone (18): Rotating the folding lever (13) about the swivelling axis (12) by approximately 90 degrees from the approximately horizontal to an approximately vertical position and take over the welded workpiece (19) and the clamping plate - B (10b)
- in the welding device - unloading zone (18): Turning back the folding lever (13) with the welded workpiece (19) and the clamping plate B (10b) from an approximately vertical position by 90 degrees to an approximately horizontal position
- in an unloading zone (15): Removing the welded workpiece (19) from the clamping plate-B (10b)

2. Method according to Claim 1, **characterised in that** the circulating transport device (1) an oval-shaped path in the transport plane XY follows, i.e. in approximately horizontal alignment, which is divided into two linear movement regions (5a, 5b) and two rotary movement regions (6a, 6b).

3. Method according to one of Claims 1 or 2,
**characterised in that** the transport device (1) rotating in the transport plane XY moves linearly in the welding/cutting zone (17) and in the loading/unloading zone (15) and moves rotationally in the welding device - unloading zone (18) and in the welding device - loading zone (16).

4. Method according to one of Claims 1 to 3,
**characterised in that** the workpiece (14) to be welded is fixed perpendicular to the transport plane XY in the clamping device (8) on the circulating transport device (1) and is welded in the welding/cutting zone (17).

5. Method according to one of Claims 1 to 4,
**characterised in that** the laser source (23) is designed to achieve coverage of the entire working area (20) with the at least one laser optic (22).

6. Method according to one of Claims 1 to 5,
**characterised in that** the workpiece (14) to be welded is loaded and unloaded in the loading/unloading zone (15) directly onto the clamping plate-A (10a).

7. Application of the method according to one of Claims 1 to 6 for the production of bipolar plates for fuel cells or for heat exchanger plates for transferring thermal energy.

## Revendications

1. Procédé de soudage par laser de pièces à usiner (14) au moyen d'un dispositif, comprenant un dispositif de transport (1) tournant dans le plan de transport XY, constitué d'une bande transporteuse entraînée par chaîne (2) comprenant plusieurs maillons de chaîne (3), qui sont chacun dotés d'un dispositif de serrage (8), qui comprend une plaque de base (11) et un bras relevable (13), dans lequel la pièce à usiner (14) peut être fixée à la plaque de base (11) au moyen de plaques de serrage (10a, 10b) pour le processus de soudage, dans lequel le dispositif comprend au moins une optique laser (22) pour souder la pièce à usiner (14), dans lequel le plan de transport XY est le plan horizontal et le processus de soudage a lieu dans le plan de soudage XZ, qui de préférence se trouve approximativement à la verticale dans l'espace, autrement dit dans la direction perpendiculaire,
**caractérisé en ce que** le procédé comprend les étapes suivantes :
- dans une zone de chargement (15): charger sur le dispositif de serrage (8) au moins une pièce à usiner (14) devant être soudée et fixer la pièce à usiner (14) devant être soudée sur la plaque de serrage B (10b)
- dans le dispositif de soudage - zone de chargement (16) : faire tourner le bras relevable (13) autour de l'axe de pivotement (12) à approximativement 90 degrés approximativement par rapport à l'horizontale dans une position approximativement verticale et fixer la pièce à usiner (14) devant être soudée et la plaque de serrage B (10b) à la plaque de base (11) et à une plaque de serrage A (10a)
- dans un dispositif de soudage - zone de chargement (16) : relever le bras relevable (13) du dispositif de serrage (8) à approximativement 90 degrés par rapport à la verticale dans une position approximativement horizontale
- dans une zone de soudage/coupe (17) : souder la pièce à usiner (14), qui est fixée entre la plaque de serrage A (10a) et la plaque de serrage B (10b)
- dans un dispositif de soudage - zone de déchargement (18) : faire tourner le bras relevable (13) autour de l'axe de pivotement (12) à approximativement 90 degrés par rapport à approximativement l'horizontale dans une position approximativement verticale et reprendre la pièce soudée (19) et la plaque de serrage - B (10b)
- dans le dispositif de soudage - zone de déchargement (18) : relever le bras relevable (13) avec la pièce soudée (19) et la plaque de serrage B (10b) à partir d'une position approximativement verticale à 90 degrés dans une position approximativement horizontale
- dans une zone de déchargement (15): retirer la pièce soudée (19) de la plaque de serrage-B (10b)

2. Procédé selon la revendication 1, **caractérisé en ce que** le dispositif de transport tournant (1) suit un chemin ovale dans le plan de transport XY, autrement dit dans un alignement approximativement horizontal, qui est divisé en deux régions de mouvement linéaire (5a, 5b) et deux régions de mouvement rotatif (6a, 6b).

3. Procédé selon l'une quelconque des revendications 1 ou 2, **caractérisé en ce que** le dispositif de transport (1) tournant dans le plan de transport XY se déplace linéairement dans la zone de soudage/coupe (17) et dans la zone de chargement/ déchargement (15) et se déplace en rotation dans le dispositif de soudage - zone de déchargement (18) et dans le dispositif de soudage - zone de chargement (16).

4. Procédé selon l'une quelconque des revendications 1 à 3, **caractérisé en ce que** la pièce (14) devant être soudée est fixée perpendiculairement au plan de transport XY dans le dispositif de serrage (8) sur le dispositif de transport tournant (1) et est soudée dans la zone de
soudage/coupe (17).

5. Procédé selon l'une quelconque des revendications 1 à 4, **caractérisé en ce que** la source laser (23) est conçue de manière à recouvrir l'ensemble de la zone d'usinage (20) au moyen de l'au moins une optique laser (22).

6. Procédé selon l'une quelconque des revendications 1 à 5, **caractérisé en ce que** le chargement et le déchargement de la pièce (14) devant être soudée s'effectuent dans la zone de chargement/déchargement (15) directement sur la plaque de serrage-A (10a).

7. Application du procédé selon l'une quelconque des revendications 1 à 6 destiné à fabriquer des plaques bipolaires pour des piles à combustible ou des plaques d'échangeur thermique pour transférer l'énergie thermique.
